# EUROPEAN PATENT APPLICATION

(11) **EP 1 972 217 A1**
(43) Date of publication of application: **24.09.2008**
(21) Application number: 07104495.2
(22) Date of filing: 20.03.2007
(51) Int. Cl.: A41D 13/002, A41D 13/005, A41D 27/28, A41D 31/00, A47C 7/74, B60N 2/56

(54) **Cover material, garment provided therewith and a method for cooling skin.**

(71) Applicant: Nederlandse Organisatie voor toegepast- natuurwetenschappelijk onderzoek TNO, 2628 VK Delft (NL)
(72) Inventor: de Voogd-Claessen, Helena, 2314 ER Leiden (NL); Schrijer, Gerardus Jacobus Maria, 2624 JH Delft (NL); Kaasjager, Antonie Dirk Johannes, 7523 CH Enschede (NL); Jager, Hein, 6723 JB Borne (NL)
(74) Representative: van Loon, C.J.J.

(57) **Abstract**

The invention relates to a cover material (10), comprising an outer layer (6b), an inner layer (6a) and at least one channel (8) formed by at least said inner layer (6a) and said outer layer (6b), wherein said inner layer (6a) is sweat permeable and said outer layer (6b) is vapour permeable. Preferably a forcing element (4) is provided near at least one channel (8) for forcing flow through said at least one channel (8). The invention further relates to a garment.

## Description

### FIELD OF THE INVENTION

The invention relates to cover material. The invention more specifically relates to cover material for allowing regulating body temperature.

### BACKGROUND OF THE INVENTION

Sweating is one of the major methods for humans or animals to regulate their body temperature. Body heat will be transferred to the surrounding environment such as ambient air by sweat transpiring from the skin. Sweating may be enhanced for example when the human or animal is exercising, working or otherwise performing bodily activity, or for example due to high temperature in the surrounding environment or covering of said body. When transpiration can evaporate freely or is otherwise removed easily, more heat can be dispelled by the skin and transferred to the surrounding environment, allowing the human or animal better to regulate his or her body temperature, thereby providing for better conditions to perform and a more agreeable setting.

Especially for physical demanding activities such as heavy labour or sports, or in environments having a relatively high humidity, regulation of the body temperature may be insufficient for optimal performance, which may lead to less than optimal results or even health risks.

Various attempts have been made for providing cover materials for, for example skin, for example as a garment or part thereof or for furniture, for regulating and especially enhancing sweat transport and/or evaporation in order to allow a better regulation of body temperature.

EP 0 780 061 discloses a body suit having an outer protective layer for protection against influences from the environment, for example in fires, and a sweat permeable inner layer, a spacer being provided between said layers. The spacer is fluid and vapour permeable and elastic. The known body suit is arranged for a fluid to be present between the inner layer and the outer layer for transporting moisture which a person wearing the suit produces. Outlet openings are provided in the outer layer for allowing air and fluid or vapour to escape from the voids in the garment formed by the inner and outer layer and the enclosed spacer. The transport of fluids and vapour through this garment is very limited and therefore the transfer of heat is not optimal. It is a disadvantage of the known body suit that it is substantially heavy due to presence of liquid flowing between the inner and the outer layer. Additionally, the known body suit has to be connected to a conditioning device substantially reducing wearing comfort for a user.

US 6 823 678 discloses a garment having air conditioning means integrated in said garment. These air conditioning means comprises a thermo electric module. The garment has an inner wall, an intermediate wall and an outer wall. Separate air flows can be obtained through a first chamber between the inner wall and the intermediate wall and through a second chamber between the intermediate wall and the outer wall respectively, which are led past opposite sides of said module, for heat transfer in either direction, depending on the direction of the air flow. Vent openings are provided both in the outer wall and in the inner wall, for allowing air to pass into and from said first and second chamber. The direction of flow of air from the first chamber is directed towards the body on which the garment is worn, thereby providing an air flow between the inner layer of the garment and a wearer of the garment. It is a disadvantage of the known garment that the garment has to be connected to an external air conditioning unit, thereby substantially reducing a wearing comfort.

US 5 970 519 discloses a cooling garment for medical personnel, provided with an inner layer and an air impermeable outer layer, connected to each other by spacer means providing for a spacing between the inner and outer layers. Air can be forced through said spacing, from a belt worn blower to openings in the outer layer at strategic places such as at the neck, waist, arms or legs, transporting moisture or moist air from the inner layer to environment via the openings in the outer layer. The known cooling garment is arranged for providing a flow of relatively dry air to the body of an individual wearing the said garment, which is enabled by the inner layer being permeable to the air flow. It is a disadvantage of such cooling garment that it has to be connected to a device supplying the air flow, thereby limiting the freedom to move of the garment wearer.

WO 2005/011413 discloses a garment to be worn as an outer garment, over the wearers undergarment. At a lower back portion of the garment fans are provided for forcing air in between the outer, air impermeable garment and the under garment thus providing an air flow space therebetween. A waist band of said garment is air impermeable, whereas the collar and sleeves are left open intentionally for letting said air escape. This garment has no inner layer, nor spacer means. It is a disadvantage of the known garment in that it has to be connected to an airstream generator, complicating design of such garment. Moreover, due to the fact that an air flow is provided between the garment and the undergarment of a user, wearing comfort is decreased due to the fact that perspiration moisture, being picked up by the air flow, is deposited at the undergarment of the user.

### SUMMARY

The present invention is directed to providing cover material, suitable for use in regulating heat transport from a body to a surrounding medium and vice a versa, especially for aiding in cooling parts of a human or animal body.

In a first aspect the present invention comprises a cover material which is provided with an outer layer, an inner layer and at least one channel formed by at least said inner layer and said outer layer, wherein said inner layer is sweat permeable and said outer layer is water vapour permeable, whereby both the inlet and the outlet of the channel are arranged on the outer layer.

In such a cover material during use flow can be provided in said at least one channel, for example, when a user is moving with a substantial speed with respect to Earth's surface, along said inner and outer layer, for transferring heat from skin adjacent said inner layer to the environment, notably to evaporate moisture more rapidly from the inner layer, enhancing the permeation of said moisture through said outer layer and as such lowering the humidity in the channel. It is an insight of the invention that an air flow in the channel increases the rate of evaporation, thereby enhancing cooling efficiency. Due to the outer layer being water vapour permeable, at least a part of the vapour generated in the channel can escape the channel also via the outer layer, thereby reducing relative humidity in the channel and increasing cooling efficiency. Preferably a flow is obtained preventing stagnant air near any of the layers. More preferably, the inner layer is moist dispersing, thereby increasing the surface area of water vapour transport for further increasing cooling efficiency.

In this description inner layer has to be understood as a layer, which may be a continuous layer or a non-continuous layer, which during normal use will be facing and preferably at least partly in contact with skin of a person or animal or with a garment worn by said human or animal, whereas outer layer has to be understood as a layer during normal use generally facing away from said skin.

In an embodiment of the cover material according to the invention forcing means are provided cooperating with the at least one channel.

In a second aspect a series of channels is formed by or between the inner and outer layer, such that a series of flow patterns can be obtained, during use, along different parts of a human or animal body. Preferably a cover material according to the present invention is incorporated in a garment, such as working garment of, preferably, sports garment.

As forcing means preferably a ventilator is used, such as a radial ventilator, which can be relatively compact for the flow it can generate. Forcing means can be blowing means, sucking means or a combination thereof, as long as they can generate during use a pressure difference over said at least one channel. Sucking means may be advantageous in order to prevent the inner layer from being blown away from the skin, but may necessitate relatively rigid spacer means between the inner and outer layer, in order to prevent the at least one channel from collapsing and becoming blocked. Therefore a combination may be preferable in some circumstances, depending on i.a. the intended use of the cover material, its design and the materials used.

In a further aspect the invention is characterised by a garment, comprising or been made of cover material according to the present invention, such as but not limited to sports or work clothing.

In a still further aspect the invention comprises a method for cooling skin of a human or animal body, wherein a cover material or a garment according to the invention is provided against at least part of said skin, said inner layer facing said skin, wherein a fluid, especially at least air is forced through said at least one channel by means of said forcing means.

These and other aspects of the present invention and embodiments thereof will be elucidated hereafter, with reference to the drawings.

### BRIEF DESCRIPTION OF THE DRAWINGS

Figure 1 shows in a schematic way an embodiment of the cover material according to the invention.
Figure 2 shows in a schematic way an embodiment of a garment comprising the cover material according to the invention.
Figure 3 shows in a schematic way an embodiment of channels arranged in the cover material according to the invention.
Figure 4 presents a schematic view of an embodiment of a cover material and a garment according to the invention.
Figure 5 presents a schematic way of an embodiment of a furniture piece arranged with the cover material according to the invention.

### DETAILED DESCRIPTION

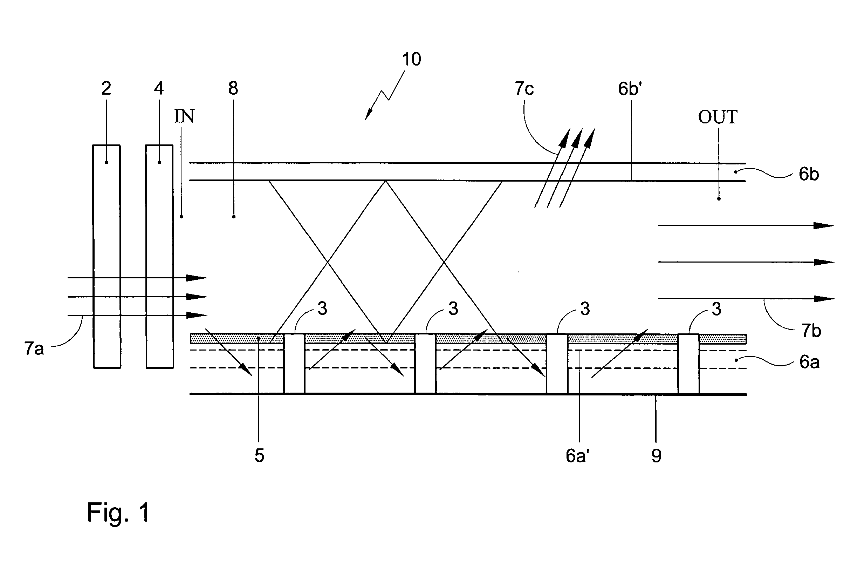

Figure 1 shows in a schematic way an embodiment of the cover material according to the invention. The cover material 10 comprises a outer layer 6b, an inner layer 6a and at least one channel 8 formed between the inner layer 6a and the outer layer 6b. The inner layer 6a in use is arranged in contact with a skin 9 of a person or animal, whereas the layer 6b is arranged in contact with ambient atmosphere. The inner layer 6a is sweat permeable and the outer layer 6b is water vapour permeable. The cover material 10 according to the invention comprises a forcing element 4, notably a suitably arranged ventilator provided in or near the channel 8 for forcing flow 7a through the channel 8. The cover material according to the invention is suitable for use in a garment, notably a sportswear. It is noted that it is sufficient to provide the cover material at certain areas of the garment, whereby on other areas any of the conventional materials can be used. It is noted that although in the embodiment shown in Figure 1 a sole channel is schematically depicted, in practice a suitable plurality of adjacent channels covering a suitable target area may be envisaged.

In such a cover material during use flow 7b can be provided in the channel 8 by the forcing means 4, along the inner layer 6a and the outer layer 6b, for absorbing moisture from the inner layer and dissipating at least part of said moisture through said outer layer, which is schematically shown by 7c, for transferring heat from skin adjacent said inner layer to the environment. Preferably the forcing means 4 and the channel geometry are chosen to cause a flow preventing stagnant air near any of the layers. Preferably, the ventilator 4 is arranged closer to an inlet IN of the channel 8 than to the outlet OUT of the channel, more preferably in or adjacent the inlet IN. Preferably, the ventilator is arranged to generate the flow 7b in the channel with a velocity of about 1m/s. It is further noted that the ventilator may be arranged either to push the flow into the inlet IN of a suitable channel, or to suck air from the ambient atmosphere via the outlet OUT.

Preferably, the inner layer 6a comprises openings 3 into the channel 8. Still preferably, at least a portion of the inner surface 6b' of the outer layer 6b is relatively rough compared to the inner surface 6a' of the inner layer 6a.

Optionally, the cover material 10 according to the invention may comprise a drying means 2, notably a silicagel or the like, arranged to reduce humidity of the incoming flow 7a. Additionally, or alternatively the cover material 10 according to the invention may comprise a coolant 5, notably urea. Preferably, the material of the inner layer 6a is (completely or locally) impregnated with urea. Alternatively, urea may be arranged on the inner layer 6a in an encapsulated form, for example as a powder having particle size of 1- 20 micrometer, preferably 1-10 micrometer, encapsulated in water permeable capsules of polyurethane. Still alternatively, a cloth, impregnated with urea (50 gram ureum/m² cloth) may be arranged on the inner layer 6a between two layers of a suitable membrane, notably a Solupor membrane. A surface of the membrane facing the channel may be covered with a hydrophilic material arranged for conducting fluid from the urea to the channel 8.

Preferably, the cover material 10 according to the invention at least the inner layer 6a comprises at least knitted or woven fabric. More preferably, the cover material is at least partly made as a double knit. More preferably, in the cover material 10 the outer layer 6b forms at least part of sides of the channel 8.

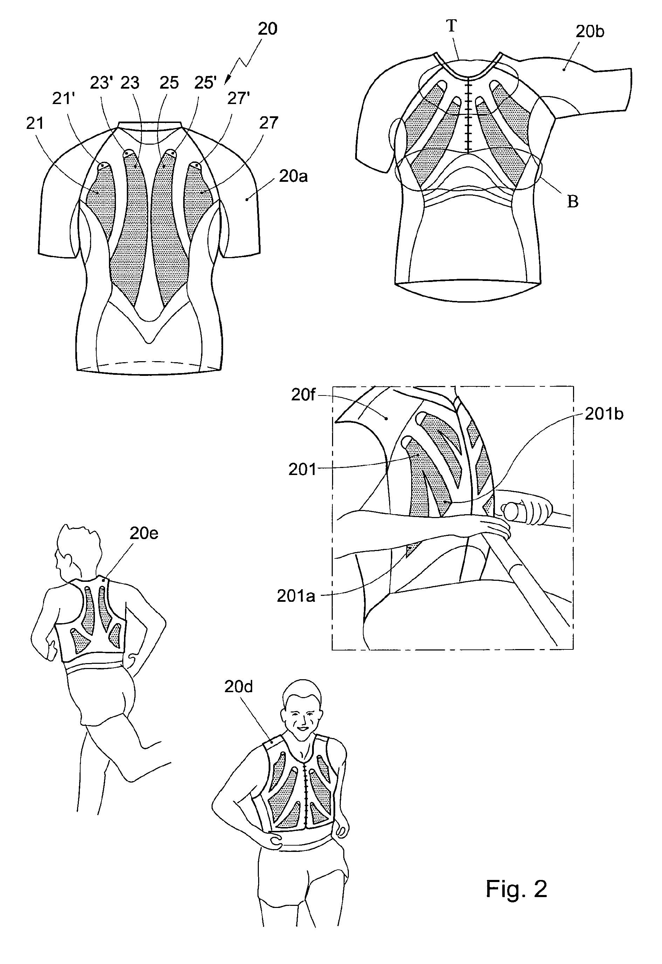

Figure 2 shows in a schematic way an embodiment of a garment comprising the cover material according to the invention. The garment 20 is preferably sportswear. In an embodiment 20a of the garment according to the invention, a plurality of channels 21, 23, 25, 27 are formed, preferably each channel provided with a ventilator 21', 23', 25', 27' arranged for forcing respective air flows into respective channels 21, 23, 25, 27. Alternatively, it is possible that a plurality of channels extend from a sole forcing means, for example a ventilator. Preferably, a series of channels 21, 23, 25, 27 is formed at different portions of the garment 20a, such that a series of flow patterns can be obtained, during use, along different parts of a human or animal body. More preferably, the channels are arranged to extend from a position at a top part T of the garment 20b to a position at a lower part B of the garment 20b. Preferably, at least one channel is arranged to superpose on a wearer's area producing elevated amount of sweat in use. More preferably, the at least one channel is oriented on an area of the garment to maximize air inflow in the channel in use. For sportswear applications such orientation may be an in-wind orientation so that the wind easily penetrates the channel when an athlete is moving. As is schematically shown in further embodiments 20c, 20d, 20e, 20f of the garment according to the invention, different channel geometries are envisaged, like a split channel 201, having a single inlet and two outlets 201a, 201b. In embodiments 20d and 20e is it schematically shown that the channels may be suitably arranged on both the front side of the garment 20d and on the rear side of the garment 20e.

It is noted that regarding the interaction of such garment with the wearer, notably an athlete, it is essential that wearer's freedom of movement freedom may not be hindered. Hindrance occurs when areas of the skin which have to move unobstructed are covered by an inflexible, bulky cover material. The channel principle according to the invention allows one to design the layout of the channels on the garment in such a way that sufficient flexibility is kept in the garment to allow normal movement. Preferably, in the cover material according to the invention channels are oriented substantially parallel to a conceived movement direction of a wearer or a body portion of the wearer, the channels being arranged at, wherein said garment comprises substantially flexible or elastic areas corresponding to channels, said areas being arranged between further areas of substantially rigid cover material. In an embodiment shown in Figure 2, it is seen that channels are located parallel to the normal movement of the chest. The material between the channels is sufficiently flexible/elastic to allow the garment as a whole to change its size and shape in accordance with movements of the body.

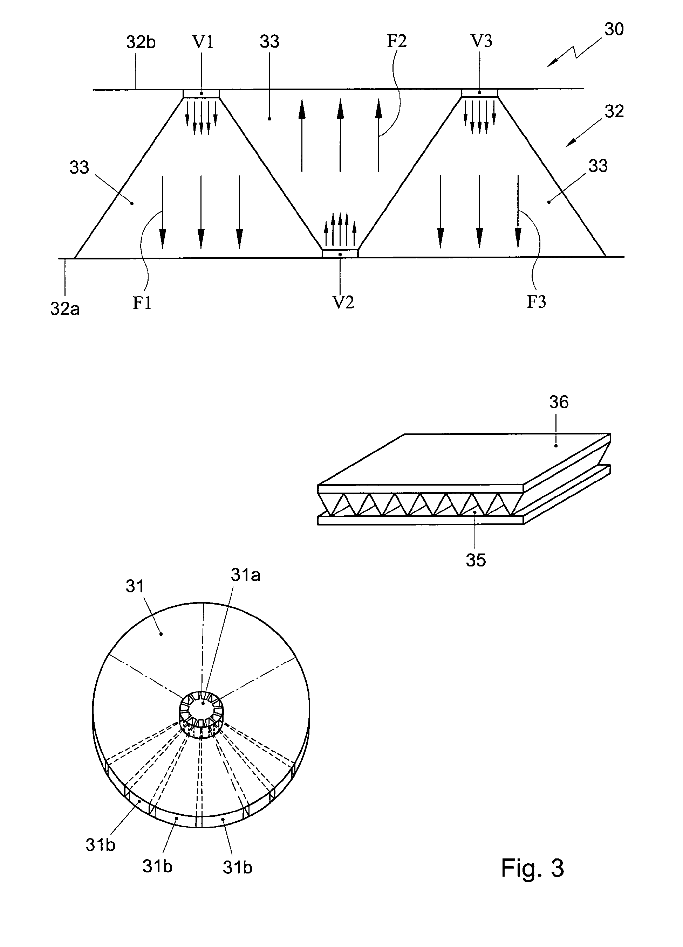

Figure 3 shows in a schematic way an embodiment of channels arranged in the cover material according to the invention. In this particular embodiment, a sole forcing means 31a is accommodated in a vicinity of a plurality of channels 31b. In this case the cover material is suitably arranged as a disk. Alternatively, the cover material 32 may be arranged as a polygon, notably a rectangle comprising one or more forcing means (not shown) and a plurality of channels 33. The channels 33 are advantageously arranged with a cross section which increases in a downstream direction. It is noted that the downstream direction is defined not with reference to either inner layer 32a or outer layer 32b, but with reference to a direction of the air flow F1, F2 or F3 in the respective channel. In this particular embodiment each channel 33 is provided with individual forcing means V1, V2, V3, etc. It is noted that the channels 35 may be used without any air forcing means. In such embodiment channels are formed having triangle geometry, whereby oblique surfaces with respect to the cover material 36 comprise a water vapour permeable membrane and the cover material 36 comprises a woven or knitted fabric.

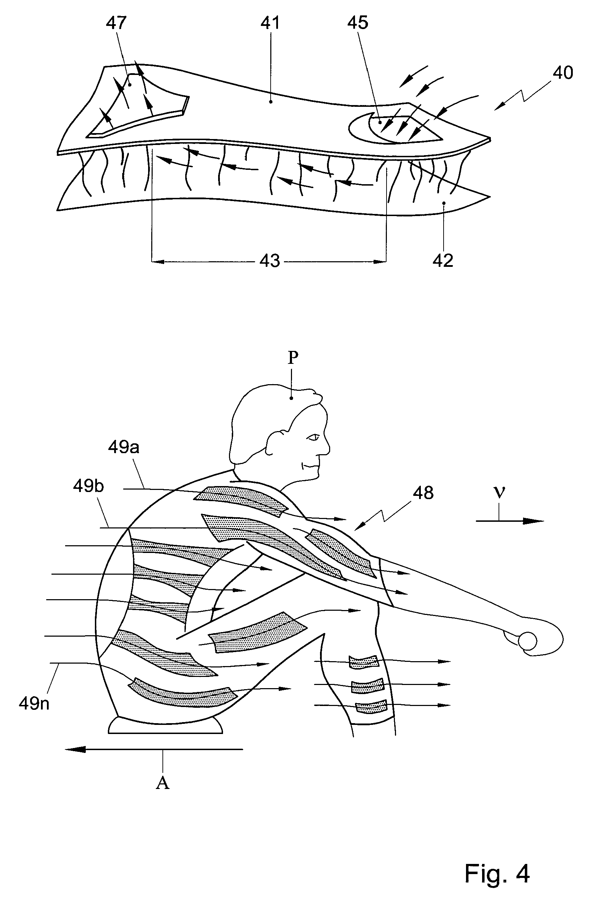

Figure 4 presents a schematic view of an embodiment of a cover material and a garment according to the invention. The cover material 40 comprises an inner layer 42, an outer layer 41, said inner layer 41 and said outer layer 42 being arranged to form a channel 43 there between wherein said inner layer is sweat permeable and said outer layer is water vapour permeable, the channel having an inlet 45 and an outlet 47 arranged on the outer layer 41. The inner layer 42 being preferably arranged in direct contact with a user, the outer layer 41 being arranged in connection with the atmosphere.

Preferably, a garment 48 is provided with the cover material 40. More preferably, such garment is being used in a recreating or sportive activity. For example, an athlete, or the like, conceived to practice sport whereby one has to displace himself with a substantial speed υ with respect to the Earth's surface may be provided with such garment. Preferably, in the cover material according to the invention channels are oriented substantially parallel to a conceived movement direction of a wearer or to a body portion of the wearer, the channels being arranged at, wherein said garment comprises substantially flexible or elastic areas corresponding to channels, said areas being arranged between further areas of substantially rigid cover material. This feature increases a freedom of movement of the body or of the body portion of the wearer. As an effect, an air flow A will be produced in the channel 43 with a non-zero speed, thereby conditioning the athlete by picking up moist produced by the athlete, and conducting it to the surrounding atmosphere via the outlet 47 and partially via the permeable outer layer 42, especially when the orientation of the channels is optimized with respect to air catching ability. Suitable garment may be provided with a plurality of channels 49a, 49b, ..., 49n. The garment 48 may also provide suitable cooling to the athlete. Additionally the garment 48, may comprise a coolant and a drying means discussed with reference to Figure 1. Other features discussed with reference to Figure 1 may be used as well.

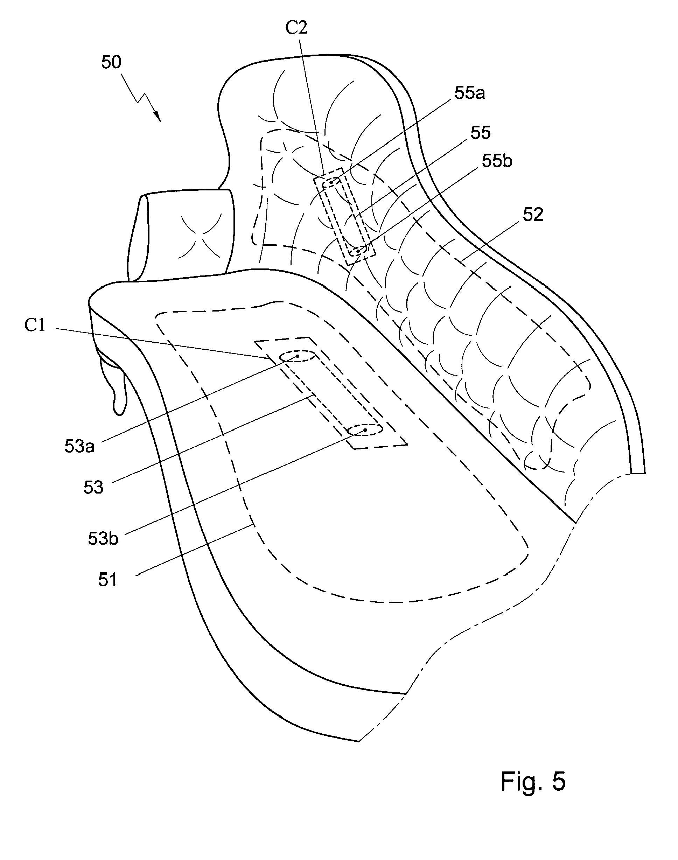

Figure 5 presents a schematic way of an embodiment of a furniture piece arranged with the cover material according to the invention. A furniture piece 50 may comprise an outdoor furniture, like garden or beach furniture or an in-house furniture, like a sofa, an arm-chair or a bed. In accordance with the technical measure of the invention the furniture comprises a support surface 51, 52 for supporting respective body portions of a person, the said support surface being provided at least partially with a cover material, comprising an outer layer C1, C2, an inner layer (not shown) and at least one channel 53, 55 formed by at least said inner layer and said outer layer, wherein said inner layer is sweat permeable and said outer layer is vapour permeable, the channel 53, 55 having an inlet 53a, 55a and an outlet 53b, 55b arranged on the inner layer C1, C2. The respective outer layers are not shown. By providing such cover material on the furniture seating comfort is increased, especially for situations when a person has to stay long in the furniture in an environment with increased temperature and/or humidity. Such furniture may be particularly advantageous for medical applications, accommodating immobilized or substantially immobilized patients. It is noted, that the cover material according to the invention can also be incorporated in a vehicle chair, for example for cars, airplanes or the like. This has a particular advantage for drivers and co-pilots who have to operate the vehicle during substantially prolonged time periods.

While specific embodiments have been described above, it will be appreciated that the invention may be practiced otherwise than as described. Moreover, specific items discussed with reference to any of the Figures may freely be inter-changed supplementing each outer in any particular way. The descriptions above are intended to be illustrative, not limiting. Thus, it will be apparent to one skilled in the art that modifications may be made to the invention as described in the foregoing without departing from the scope of the claims set out below.

## Claims

1. Cover material, comprising an outer layer, an inner layer and at least one channel formed by at least said inner layer and said outer layer, wherein said inner layer is sweat permeable and said outer layer is water vapour permeable, the channel having an inlet and an outlet arranged on the outer layer.

2. Cover material according to claim 1, wherein at least one forcing element is provided in or near said at least one channel for forcing flow through said at least one channel.

3. Cover material according to claim 1 or 2, wherein a series of channels is formed by at least said inner layer and said outer layer, especially between said inner layer and said outer layer.

4. Cover material according to claim 2, wherein forcing means are provided for forcing flow through each of said channels.

5. Cover material according to any one of claims 1-4, wherein the inner layer comprises at least one hydrophilic portion or is made of hydrophilic material.

6. Cover material according to any preceding claim, wherein said inner layer comprises openings into said at least one channel.

7. Cover material according to any one of the preceding claims, wherein said cover material is comprised in a garment.

8. Cover material according to claim 7, wherein the surface area covered by said at least one channel or combined channels in said garment is between 0.005 and 1 m², more specifically between 0.2 and 0.4 m².

9. Cover material according to claim 7 or 8, wherein the at least one channel is arranged to superpose a wearer's area producing elevated amount of sweat in use.

10. Cover material according to any preceding claim 7, 8 or 9, wherein at least one channel is oriented on the garment to maximize air flow in the channel in use.

11. Cover material according to any one of the preceding claims, wherein at least part of the inner surface of said outer layer in said channel is relatively rough compared to at least one further side of said channel.

12. Cover material according to any one of the preceding claims, wherein said at least one channel extends from an inlet to an outlet, wherein said forcing means are provided near said inlet or said outlet.

13. Cover material according to any one of the preceding claims, wherein said at least one channel has a cross section which increases at least in part of said channel in a downstream direction.

14. Cover material according to any one of the preceding claims, wherein the inner layer has at least at a side facing said at least one channel a moist dispersing capacity.

15. Cover material according to any one of the preceding claims, wherein at least a number of channels extend from one forcing means.

16. Cover material according to any one of the preceding claims, wherein at least the inner layer comprises at least knitted or woven fabric.

17. Cover material according to any one of the preceding claims, wherein the material is at least partly made as a double knitting.

18. Cover material according to any one of the preceding claims, wherein the outer layer forms at least part of sides of said at least one channel.

19. Cover material according to any one of the preceding claims, wherein at least one channel comprises a drying means arranged at an inlet of the said channel for reducing humidity of the air flow conceived to propagate through the channel.

20. Cover material according to any one of the preceding claims, wherein the inner layer comprises a coolant arranged to reduce the temperature of the inner layer in use.

21. Cover material according to any one of the preceding claims 7 - 20, wherein the channels are oriented substantially parallel to a conceived movement direction of a body portion of the wearer the channels being arranged at, wherein said garment comprises substantially flexible or elastic area corresponding to channels, said area being arranged between further areas of substantially rigid cover material.

22. Furniture provided with a support surface for a user, the support surface comprising the cover material according to any one of the preceding claims.

23. Vehicle accommodation provided with a support surface for a user, the support surface comprising the cover material according to any one of the preceding claims.

24. Method for cooling skin of a human or animal body, wherein a cover according to any one of claims 1 - 21 is provided against at least part of said skin, said inner layer facing said skin, wherein a fluid, especially at least air is forced through said at least one channel.

25. Method according to claim 24, wherein the air is forced by a forcing element provided near at least one channel.

26. Method according to claim 25, wherein the fluid, especially said air is at least partly sucked through said at least one channel.

27. Method according to any one of the preceding claims, wherein said cover material is positioned such that said fluid is forced through said at least one channel from a position near the skin having a relatively high humidity and/or temperature to a position near the skin having a relatively low humidity and/or temperature.

28. Method for forming a cover material according to any one of claims 1 - 21, wherein at least part of the cover material is made as a double knitted material.

29. Method according to claim 23 - 28, wherein said inner layer is made having a ribbed structure at least at part of one side, wherein said outer layer is provided on said ribbed structure, thereby forming at least one channel between said inner and said outer layer.
